# EUROPEAN PATENT APPLICATION

(11) **EP 3 107 334 A1**
(43) Date of publication of application: **21.12.2016**
(21) Application number: 16182524.5
(22) Date of filing: 27.06.2012
(51) Int. Cl.: H04W 48/08, H04W 72/08, H04W 72/12, H04W 8/00

(54) **METHOD FOR SUPPRESSING OUT-BAND LEAKAGE POWER INTERFERENCE**

(30) Priority: 03.08.2011 CN 201110220804
(62) Divisional of application: 12820576.2
(71) Applicant: ZTE Corporation, Shenzhen City, Guangdong Province 518057, (CN)
(72) Inventor: Diao, Xinxi, Shenzhen City, Guangdong 518057 (CN); Hu, Jian, Shenzhen City, Guangdong 518057 (CN); Zhao, Xiaowu, Shenzhen City, Guangdong 518057 (CN); Xu, Ling, Shenzhen City, Guangdong 518057 (CN); Li, Dongmei, Shenzhen City, Guangdong 518057 (CN)
(74) Representative: Schröer, Gernot H.

(57) **Abstract**

The present discloses a method for suppressing out-band leakage power interference among terminals, applied at a network side. The method includes: judging that a first frequency band and a second frequency band are adjacent frequency bands according to frequency information contained in cell information of a second cell covered by a second radio access point on the second frequency band obtained by a terminal served by a first radio access point on the first frequency band on a cell information transmitting window; according to uplink and/or downlink time slot configuration information of a second radio frame on the second frequency band contained in the cell information obtained on the cell information transmitting window, and combining with uplink and/or downlink time slot configuration of a first radio frame of the first frequency band, judging that there is a time slot, which is in an opposite transmitting direction and appears at a same time with a time slot contained in a second radio frame on the second frequency band, in time slots contained in the first radio frame of the first frequency band; wherein, time slots in opposite transmitting directions refer to that one of two time slots is an uplink time slot while another one of the two time slots is a downlink time slot; and scheduling to suppress the out-band leakage power interference among terminals on the first frequency band and/or the second frequency band.

## Description

### Technical Field

The present document relates to the mobile communication technology, and in particular, to a method, device and system for transmitting cell information, and a method for suppressing adjacent channel interference.

### Background of the Related Art

In order to realize the comprehensive utilization of the resources among different systems and reduce the expenses of searching for the cells by the terminal, a concept of a common pilot channel (CPC) or called as a cognitive pilot channel (CPC) is already proposed at present, referring to A White Paper by the FP7 project End-to-End Efficiency (E3), "Support for heterogeneous standards using CPC" with a Release Date of 30-06-2009.

There are two CPC realization schemes; one is the in-band CPC, that is, to transmit the general information of the multiple systems following different wireless technical specifications to a terminal by using the radio access technology that the system follows on the working band of one of the systems; another is to transmit the general information of the multiple systems following different wireless technical specifications to the terminal on a frequency band which is not used by the systems, and the CPC information can be transmitted by using a radio access technology that the existing system follows, and also can be transmitted by using one new radio access technology developed specially for transmitting the CPC information.

The usage mode of the CPC is that: the terminal performs the detection on the CPC during the starting-up stage; and the terminal periodically detects during the resident stage.

The target pursued by the design of the CPC is: to simplify a procedure of selecting the radio access technology (RAT), to avoid searching for the CPC within the large bandwidth range.

The method provided by China patent application number CN200810102852.6 with an invention title as "A base station, wireless communication system and switching method" includes the following steps: a public channel and a service channel are allocated on the service carrier frequencies of the indoor cover system, and the working frequency point of the service carrier frequency of the indoor cover system is different from the working frequency point of the service carrier frequency of the outdoor macro cellular system; and the public channel is allocated on the beacon carrier frequencies of the indoor cover system, and the system message only including the working frequency point information of the service carrier frequencies of the indoor cover system is sent through the public channel, wherein, the working frequency point of the beacon carrier frequency of the indoor cover system is the same as the working frequency point of the service carrier frequency of the outdoor macro cellular system.

The solution has the following defects:
(1). that the micro cell (Indoor cover system) uses a carrier frequency which is the same as that of the outdoor macro cell to transmit the system message will produce co-channel interference with the macro cell terminal, that is, during the time interval when the indoor cover system sends the system information, when the system information is sent by using the frequency point which is the same as that of the outdoor macro cell, strong co-channel interference will be produced with the terminal which is located in the coverage area of the indoor cover system and receives the signal from the outdoor macro cell during that time interval, and this technology does not provide the method to avoid this kind of co-channel interference.
(2). that the micro cell (Indoor cover system) uses a carrier frequency which is the same as that of the outdoor macro cell to transmit the system message will produce adjacent channel interference with the macro cell terminal, that is, during the time interval when the indoor cover system sends the system information, when the system information is sent by using the frequency point which is the same as that of the outdoor macro cell, strong adjacent channel interference will be produced with the terminal which is located in the coverage area of the indoor cover system and receives the signal from a frequency point adjacent to the outdoor macro cell frequency point during that time interval, and this technology does not provide the method to avoid this kind of adjacent channel interference.
(3). the micro cell (Indoor cover system) uses the carrier frequency which is same as that of the outdoor macro cell to transmit the system message, the way of transmitting with a same frequency point limits the flexibility of resource allocation and interference suppression during the process that the micro cell (the indoor cover system) transmits the system message.

Moreover, arranging the radio access point of the micro cell within the coverage area of the macro cell will also cause the adjacent channel interference between the micro cell and the micro cell, and the adjacent channel interference between the micro cell and the micro cell will be more apparent, which is embodied specifically in:
1). the adjacent channel interference between the terminal accessing to the FDD macro cell base station and the terminal accessing to the radio access point of the TDD micro cell, wherein, though the adjacent channel interference between the FDD macro cell base station and the TDD micro cell base station can be controlled effectively through the spatial separation and minor protection band, the out-band leakage power of the transmitting channel of the terminal accessing to the FDD macro cell base station will produce the interference with the receiving channel accessing to the terminal of the TDD micro cell radio access point which works on the frequency band adjacent to the FDD uplink frequency band, and also produce the interference with the receiving channel of the TDD micro cell radio access point which works on the frequency band adjacent to the FDD uplink frequency band.
2). the adjacent channel interference between the transmitting channel and the receiving channel between the TDD micro cell access points working on the adjacent frequency bands deployed in the same area will be stronger.
3). the adjacent channel interference between the terminals served by the TDD micro cell access points working on the adjacent frequency bands deployed in the same area will be stronger.

There is no mature solution to the above-mentioned adjacent channel interference yet at present. In the related art, and the patent application related to solving the interference of the adjacent channel is as follows:
the China patent application number CN200610011881.2 with the title of invention as "A method and device for reducing the interference in the time-division duplex cellular network" puts forward a method for reducing the interference in the time-division duplex cellular network, to solve the interference problem between the adjacent cells, and especially to solve the interference problem between mobile stations between the adjacent cells, and the method includes the following steps: in step 1, the time slot position of the mobile station in the local cell time table is adjusted according to the signal of the mobile station of the local cell; in step 2, the time table is broadcasted in the local cell, to make the base station and the mobile station of the local cell carry on communication according to the time table. It is expected to solve the co-channel interference problem, while it does not provide the method on how to solve the adjacent channel interference among the adjacent terminals on the geographic zone.

The method provided by the American patent application number US20100234040 A1 with the title of invention as "METHODS AND APPARATUS FOR ADJACENT CHANNEL INTERFERENCE MITIGATION IN ACCESS POINT BASE STATIONS" is that: in the first step, the power level of at least one channel in a group of channels is determined at the node of the wireless network side, and the group of the channels are used by the first network nearby, or used by the second network nearby; in the second step, the node at the network side adjusts its output power according to the determined power level. The first network is a UMTS network, and the second type network is an LTE network. The power level is a measurement of the predetermined signal, that is, the pilot signal. The method of reducing the transmitting power adopted by the technical scheme can control the interference with the adjacent frequency band / adjacent channel effectively, but reducing the power will also reduce the spectrum effectiveness and communication distance of the channel.

The method provided in the international patent number WO/2010/135466 with the patent name as "MINIMIZING INTERFERENCE TO NON-ASSOCIATED USERS" is that: in the first step, it is determined that an overlap exists between the first area covered by the base station and the second area covered by the micro cell access point (femto access point); and the base station uses the first carrier to perform the wireless communication; the micro cell radio access point uses the second carrier to perform the wireless communication, and, the transmitting by the micro cell radio access point produces the interference with the transmitting by the base station of the macro cell; in the second step, the radio frequency leakage power undergone by the communicator which performs the communication with the base station is estimated; in the third step, the interference undergone by the communicator which performs the communication with the base station is minimized. The disadvantage of the technology is that it is invalid under the situation that no carrier can be configured.

Synthesizing the above technologies, both the in-band transmitting and the out-band transmitting adopted by the CPC scheme that the industry discusses at present require the terminal to have an ability to receive the signal on the frequent band of sending the CPC channel, and this will produce two problems:
1). the terminal does not have the ability to receive the CPC, for example, in the situation that the CPC is transmitted on a UMTS air interface, a GSM/LTE bi-modulus terminal cannot receive the CPC message;
2). even if a later new terminal has an ability of supporting CPC receiving, it also will increase the terminal complexity, for example, the GSM/LTE bi-modulus terminal, in order to receive the CPC message sent on the UMTS air interface, will increase the UMTS receiving channel;
therefore, the current CPC design scheme is unable to realize the extensive compatibility of the terminal.

### Summary of the Invention

The technical problem that the present document requires to solve is to overcome the shortage that the CPC design scheme can not be extensively compatible with the current terminal in the related art.

In order to solve the above-mentioned technical problem, the present document first provides a method for transmitting cell information, comprising:
allocating time and frequency resources on a first frequency band used by a downlink channel of a first radio access point located at a first station address, or on a third frequency band among networking frequency bands of a downlink channel of a system to which the first radio access point belongs, wherein, the time and frequency resources serve as a cell information transmitting window of a second radio access point located at a second station address and configuring a downlink service channel and/or a control channel on a second frequency band; and
a second cell obtaining time and frequency information of the cell information transmitting window, and taking a time of a first radio frame transmitted by the first radio access point as a reference, transmitting the cell information of the second radio access point on the second frequency band by using the time and frequency resources contained in the cell information transmitting window;
wherein, the first radio access point covers a first cell on the first frequency band, and the second radio access point covers a second cell on the second frequency band.

The present document further provides a cell information transmitting device, comprising:
a first receiving channel, configured to receive a signal from a first radio frame transmitted on a first frequency band by a first radio access point located at a first station address, and obtain time information of the first radio frame;
a first transmitting channel, configured to transmit cell information of a service cell covered by a second frequency band to a terminal served by the first radio access point on the first frequency band where the first radio access point configures the downlink channel or on a third frequency band among networking frequency bands of the downlink channel of a system to which the first radio access point belongs;
a cell information transmitting control unit, configured to control the first transmitting channel to transmit the cell information of the service cell covered by the second frequency band in the cell information transmitting window;
wherein, the cell information transmitting device is configured as a same physical device jointly designed with the second radio access point and located in a second station address or in a second cell, or a physical device located at the second station address, or a physical device separated from the second radio access point and located in the second cell.

The present document further provides a heterologous frequency band and heterologous station address cell information transmitting and receiving system, comprising at least one cell information transmitting device; at least a first radio access point, wherein, the first radio access point covers a first cell; at least one terminal accessing the first radio access point; a cell information transmitting / receiving control unit; wherein, the cell information transmitting device is arranged at a second station address, or arranged in a second cell covered by a second radio access point, and the cell information transmitting device comprises a first receiving channel, a first transmitting channel and a cell information transmitting control unit; or comprises a first receiving channel, a first transmitting channel, a second transmitting channel and a cell information transmitting control unit; wherein:
the first receiving channel is configured to: receive a signal on a first radio frame transmitted on a first frequency band by the first radio access point located on a first station address, to obtain time information of the first radio frame; or obtain time-frequency information of the cell information transmitting window or the time information of the first radio frame transmitted on the first frequency band by a network side from a returning link of the second cell;
the first transmitting channel is configured to: on the first frequency band used by the downlink channel of the first radio access point, or at the cell information transmitting window configured on a third frequency band among networking frequency bands of the downlink channel of a system to which the first radio access point belongs, transmit the cell information of the second cell to the terminal served by the first radio access point;
the second transmitting channel is configured to: transmit one or more of an access request signal, an identification number of a second wireless node, a parameter for representing a second wireless node type or capacity, and cell information of a service cell on the second frequency band to the first radio access point;
the cell information transmitting control unit is configured to: use the time information of the first radio frame received by the first receiving channel to control the first transmitting channel to transmit the cell information of the second cell in the cell information transmitting window;
the first radio access point is configured to: be located at a first station address and allocate time and frequency resources on the first frequency band used by the downlink channel of the first radio access point, or on the third frequency band among networking frequency bands of the downlink channel of the system to which the first radio access point belongs, wherein, the time and frequency resources serve as the cell information transmitting window of the second radio access point located at the second station address and configuring the downlink service channel and/or a control channel on a second frequency band; and
the cell information transmitting / receiving control unit is configured to: be located at the network side and control the cell information transmitting device to use the cell information transmitting window configured on the first frequency band or the third frequency band to transmit the cell information of the second cell on the second frequency band, and control the terminal to receive the cell information of the second cell on the second frequency band in the cell information transmitting window.

The present document further provides a method for suppressing out-band leakage power interference among terminals, applied at a network side, comprising:
judging that a first frequency band and a second frequency band are adjacent frequency bands according to frequency information contained in cell information of a second cell covered by a second radio access point on the second frequency band obtained by a terminal served by a first radio access point on the first frequency band on a cell information transmitting window;
according to uplink and/or downlink time slot configuration information of a second radio frame on the second frequency band contained in the cell information obtained on the cell information transmitting window, and combining with uplink and/or downlink time slot configuration of a first radio frame on the first frequency band, judging that there is a time slot which is in opposite transmitting direction and appears at the same time with a time slot contained in a second radio frame on the second frequency band, in time slots contained in the first radio frame on the first frequency band; wherein, time slots in opposite transmitting direction refer to that one of two time slots is an uplink time slot while another of the two time slots is a downlink time slot; and
scheduling to suppress the out-band leakage power interference among terminals on the first frequency band and/or the second frequency band.

The present document further provides a method for suppressing out-band leakage power interference between a radio access point and a terminal, applied at a network side, comprising:
judging that a first frequency band and a second frequency band are adjacent frequency bands according to frequency information contained in cell information of a second cell covered by a second radio access point on the second frequency band obtained by a terminal served by a first radio access point on the first frequency band on a cell information transmitting window;
according to uplink and/or downlink time slot configuration information of a second radio frame on the second frequency band contained in the cell information obtained on the cell information transmitting window, and combining with uplink and/or downlink time slot configuration of a first radio frame on the first frequency band, judging that there is a time slot, which is in the same transmitting direction and appears at the same time with a time slot contained in a second radio frame on the second frequency band, in the time slots contained in the first radio frame on the first frequency band; wherein, time slots in a same transmitting direction refer to that two time slots are both uplink time slots or downlink time slots; and
scheduling to suppress the out-band leakage power interference between a radio access point and a terminal on the first frequency band and/or the second frequency band.

The embodiments of the present document overcome the shortage that the current CPC technical scheme is unable to be extensively compatible with the current terminal, and it is easy to realize the whole compatibility with the current terminal. In the embodiments of the present document, a terminal can detect the heterologous frequency band and heterologous station address system or the heterologous system and heterologous station address wireless node and obtain the information; and based on this, it is easy to realize a handover among the cells of different systems and schedule among the cells of different systems, facilitate the control on the adjacent channel interference, and realize the positioning of the mobile station.

Other features and advantages of the present document will be illustrated in the specification hereinafter, and will be obvious partly from the specification, or will be understood by implementing the present document. The objective and other advantages can be realized and obtained from the structures specifically indicated in the specification, claims and the accompanying drawings.

### Brief Description of Drawings

The accompanying drawings described herein are used to provide further understanding for the technical scheme of the present document and constitute a part of the present application, which are used to explain the technical scheme of the present document together with the embodiments of the present document, rather than constituting an inappropriate limitation on the technical scheme of the present document. Wherein:
FIG. 1 (a) is a flow chart of a method for developing a cell information transmitting window according to an embodiment of the present document;
FIG. 1 (b) is a diagram of a time-frequency position occupied by a cell information transmitting window according to an embodiment of the present document;
FIG. 2 is a flow chart of a method for suppressing adjacent channel interference among terminals according to an embodiment of the present document;
FIG. 3 is a flow chart of a method suppressing adjacent channel interference between a radio access point and a terminal according to an embodiment of the present document;
FIG. 4 (a) and FIG. (b) are diagrams of different structures of a cell information transmitting device according to an embodiment of the present document;
FIG. 5 is a composition diagram of a cell information transmitting system among systems according to an embodiment of the present document;
Fig. 6 is an example of a method for reducing adjacent channel interference with a TDD micro cell terminal by an FDD macro cell terminal according to an embodiment of the present document;
FIG. 7 is an example of a method for reducing adjacent channel interference with an FDD macro cell terminal by a TDD micro cell terminal according to an embodiment of the present document;
FIG. 8 is an example of adjacent channel interference with a receiving channel of an FDD macro cell terminal by a TDD micro cell terminal according to an embodiment of the present document;
Fig. 9 is an example of adjacent channel interference with a receiving channel of a TDD radio access point working on an adjacent frequency band by an FDD macro cell terminal according to an embodiment of the present document.

### Preferred Embodiments of the Invention

The embodiment of the present document is described in details combining with the accompanying drawings and the examples hereinafter, and the realization procedure on how to use the technology means to solve the technical problem and reach the technical result by the present document can be fully understood and implemented.

First of all, the embodiments of the present document and each feature in these embodiments are combined with each other in the case of not conflicting, which are all in the protection range of the present document. In addition, the steps as shown in the flow chart of the accompany drawing can be executed in the computer system such as a group of computer executable instructions, and, although the logic sequence is shown in the flow chart, in some cases, the steps shown or described can be executed according to a sequence different from here.

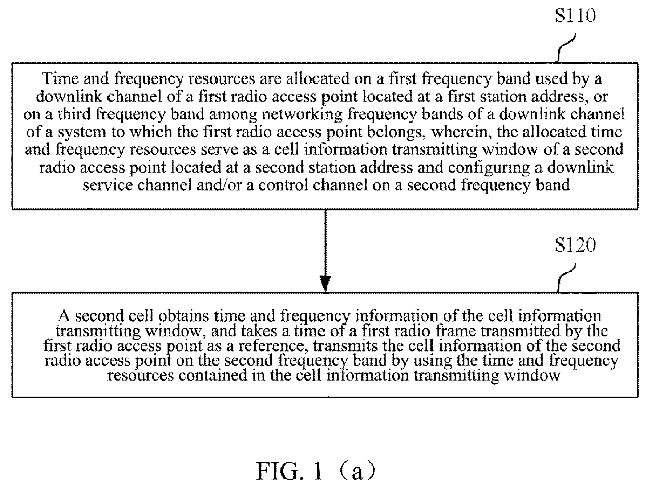

FIG. 1 (a) is a flow chart of a method for transmitting cell information provided by an embodiment of the present document, which is applied to transmit cell broadcast information on frequency bands used by opposite side between radio access points arranged at a heterologous station address and heterologous frequency band. As shown in FIG. 1 (a), it mainly includes the following steps.

In step S110, time and frequency resources are allocated on a first frequency band used by a downlink channel of a first radio access point located at a first station address, or on a third frequency band among networking frequency bands of a downlink channel of a system to which the first radio access point belongs, wherein, the allocated time and frequency resources serve as a cell information transmitting window of a second radio access point located at a second station address and configuring a downlink service channel and/or a control channel on a second frequency band; wherein, the first frequency band and the third frequency band are the frequency bands used by the downlink channels of different cells in the system to which the first radio access point belongs, and the first frequency band and the third frequency band used on edge areas of the adjacent cells are orthogonal.

In step S120, a second cell obtains time and frequency information of the cell information transmitting window, and takes a time of a first radio frame transmitted by the first radio access point as a reference, transmits the cell information of the second radio access point on the second frequency band by using the time and frequency resources contained in the cell information transmitting window; wherein, the second cell taking a time of a first radio frame as a reference includes: a cell information transmitting device located in the second cell or located at the second station address obtaining time information of the first radio frame.

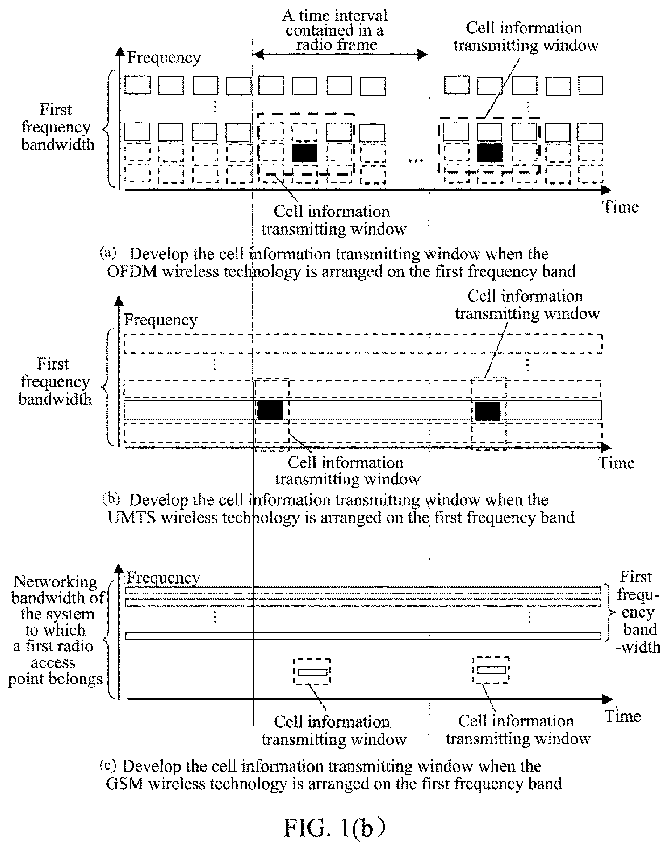

Based on the difference of the radio access technologies deployed on the first frequency band, and referring to FIG. 1 (b), the modes of occupying the time and frequency resources by the cell information transmitting window are different as well. When the radio access technology adopting OFDM modulation is deployed on the first frequency band, as shown in FIG. 1 (b) - (a), what the cell information transmitting window occupies is one or more time and frequency resources blocks composed of the OFDM subcarriers; when the radio access technology adopting CDMA is deployed on the first frequency band, as shown in FIG. 1 (b) - (b), the time and frequency resources occupied by the cell information transmitting window are the frequency resources of which the spectral width is the modulation bandwidth after the CDMA spread spectrum modulation; when the radio access technology adopting GSM system is deployed on the first frequency band, as shown in FIG. 1 (b) - (c), the time and frequency resources occupied by the cell information transmitting window are the frequency resources of which the spectral width is the channel bandwidth of the GSM system, and, what the cell information transmitting window occupies is the frequency that is not used by the GSM system at the second station address in the GSM downlink networking bandwidth.

The second cell transmitting the cell information of the second radio access point on the second frequency band on the time and frequency resources contained in the cell information transmitting window can be that: the first radio access point transmits time-frequency location information of the cell information transmitting window to a terminal accessing to the first radio access point on the first frequency band by using a first radio access technology; the cell information transmitting device located in the second cell or located at the second station address configures a receiver at the first frequency band to receive the time-frequency location information of the cell information transmitting window; or, the cell information transmitting device obtains the time-frequency location information of the cell information transmitting window transmitted by the network side through the returning channel; the cell information transmitting device transmits the cell information of the second radio access point on the second frequency band by using the time and frequency resources contained in the cell information transmitting window on the first frequency band or the third frequency band according to the time-frequency location information of the cell information transmitting window; and the terminal receives the cell information of the second radio access point on the second frequency band on the time and frequency resources contained in the cell information transmitting window on the first frequency band or the third frequency band.

The above-mentioned second radio access point transmits the cell information on the second frequency band by using the time and frequency resources contained in the cell information transmitting window on the first frequency band or on the third frequency band according to the time-frequency location information of the cell information transmitting window, wherein, the cell information on the second frequency band includes one or a combination of multiple of the following information:
cell public identification information of a cell covered by the second radio access point on the second frequency band, used for detecting an existence of the cell on the second frequency band;
cell identifying information of a cell covered by the second radio access point on the second frequency band, that is, the cell ID information, used for identifying a specific cell;
carrier frequency point information of a cell covered by the second radio access point on the second frequency band, used for introducing an access to the cell or used for controlling the adjacent channel interference of the cell;
system information of a cell covered by the second radio access point on the second frequency band, used for judging the availability of the system;
uplink and downlink time slot configuration information of a cell covered by the second radio access point on the second frequency band, used for interference coordination or frequency spectrum sharing between the TDD system and other systems;
occupancy state of spectrum resources of a cell covered by the second radio access point on the second frequency band; and
spectrum resources available for transferring of a cell covered by the second radio access point on the second frequency band.

When the cell information of the second radio access point on the second frequency band comprises the cell public identification information of the cell covered by the second radio access point on the second frequency band, a plurality of radio access points configuring the channel on the second frequency band transmit same information signs in the cell information transmitting window; or, a plurality of radio access points configuring the channel on the second frequency band and a plurality of radio access points configuring the channel on a fourth frequency band transmit same information signs in the cell information transmitting window.

When the above-mentioned terminal receives the cell information of the second radio access point on the second frequency band on the time and frequency resources contained in the cell information transmitting window on the first frequency band or the third frequency band, the terminal reports the information received on the time and frequency resources contained in the cell information transmitting window to a network side, and the information can be one or a combination of multiple of the following information:
cell public identification information of a cell covered by the second radio access point on the second frequency band;
cell identifying information of a cell covered by the second radio access point on the second frequency band;
carrier frequency point information of a cell covered by the second radio access point on the second frequency band;
signal intensity or signal power received by the terminal in the cell information transmitting window;
uplink and downlink time slot configuration information of a cell covered by the second radio access point on the second frequency band;
spectrum resources available for transferring of a cell covered by the second radio access point on the second frequency band; and
spectrum resources used in the cell covered by the second radio access point on the second frequency band.

After the above-mentioned terminal reports the information received on the time and frequency resources contained in the cell information transmitting window to the network side, the network side uses the information reported by the terminal and received on the time and frequency resources contained in the cell information transmitting window to perform one or more of the following operations:
judging whether the terminal can be switched to or scheduled to a cell covered by the second radio access point on the second frequency band;
judging whether there is an adjacent channel interference between the second frequency band and the first frequency band; and
estimating a position of the terminal according to a position of the second radio access point or a position of the second cell.

The cell information transmitting device obtains the time information of the first radio frame by adopting one of the following ways:
the cell information transmitting device receives a downlink signal transmitted on the first radio frame of the first frequency band by the first radio access point, to obtain starting time information of the first radio frame or timeslot information of the first radio frame transmitted by first radio access point; and
the cell information transmitting device obtains the starting time information of the first radio frame or the timeslot information of the first radio frame transmitted by a network side through a returning channel.

The above-mentioned taking a time of the first radio frame as a reference includes: determining a time slot position corresponding to a time interval occupied by the cell information transmitting window on the first radio frame according to the starting time information of the first radio frame or the timeslot information of the first radio frame.

The above-mentioned the second cell transmitting the cell information of the second radio access point on the second frequency band on the time and frequency resources contained in the cell information transmitting window includes: a wireless technology adopted by the cell information transmitting device located in the second cell or located at the second station address for transmitting the cell information in the cell information transmitting window being the same with a wireless technology adopted by the first radio access point on the first frequency band.

The above-mentioned second cell transmitting the cell information in the cell information transmitting window includes: a protection time (time mask) and/or a protection bandwidth (frequency mask) existing between the time and frequency resources used by the cell information transmitting device in the cell information transmitting window and time and frequency resources around the cell information transmitting window.

The wireless technology adopted by the cell information transmitting device when transmitting the cell information in the cell information transmitting window being the same with the wireless technology adopted by the first radio access point on the first frequency band, includes: a grammar adopted by the cell information transmitting device for transmitting the cell information in the cell information transmitting window being the same with a grammar adopted by the system to which the first radio access point belongs for transmitting the cell information.

The above-mentioned first radio access point is a radio access point which covers the macro cell, and the second radio access point is a radio access point which covers the micro cell;
or, both the first radio access point and the second radio access point are radio access points which cover the macro cell;
or, both the first radio access point and the second radio access point are radio access points which cover the micro cell;
or, the first radio access point and/or the second radio access point is a radio access point containing a one-way downlink broadcast channel.

When the above-mentioned first radio access point is a radio access point which covers the macro cell and the second radio access point is a radio access point which covers the micro cell, the first radio access point and the second radio access point adopt different radio access technologies (RAT) and/or the first radio access point and the second radio access point are arranged in adjacent frequency bands.

When both the above-mentioned first radio access point and the second radio access point are the radio access points which cover the macro cell, the first radio access point and the second radio access point adopt different radio access technologies (RAT) and/or the first radio access point and the second radio access point are arranged in adjacent frequency bands.

When both the above-mentioned first radio access point and the second radio access point are the radio access points which cover the micro cell, the first radio access point and the second radio access point adopt different radio access technologies (RAT) and/or the first radio access point and the second radio access point are arranged in adjacent frequency bands.

Specifically, the wireless communication technology supported by the first radio access point and/or the second radio access point is one or a combination of multiple of the following:
1). a GSM system, including a micro cell access point , a radio frequency directly amplifier node (repeater), and an indoor covering micro base station node conforming with the GSM technical specification;
2). a UMTS system, including a micro cell access point, a wireless digital relay node, a radio frequency directly amplifier node (repeater), and an indoor covering micro base station node conforming with the UMTS technical specification;
3). an LTE system, including a micro cell access point, a wireless digital relay node, a radio frequency directly amplifier node (repeater), and an indoor covering micro base station node conforming with the LET technical specification;
4). a system contained in the Wireless Local Area Network series IEEE802.11;
5). a ground video / audio broadcast system;
6). a satellite digital audio and video broadcast system.

The above-mentioned time and frequency information of the cell information transmitting window obtained by the second cell comprises at least one of the following information:
1). a time position and/or a time interval where the cell information transmitting window appears; and
2). a frequency point and/or frequency interval contained in the cell information transmitting window.

The second cell obtains the time and frequency information of the cell information transmitting window by means of one of the following:
1). obtaining the time and frequency information of the cell information transmitting window by a default mode according to pre-specified cell information transmitting window parameters;
   wherein the second cell obtains the time and frequency of the cell information transmitting window according to a wireless technical specification or according to a network planning of the operator;
2). the cell information transmitting device located in the second cell or located at the second station address obtaining the time and frequency information of the cell information transmitting window from the downlink channel of the first radio access point on the first frequency band; and
3). the cell information transmitting device located in the second cell or located at the second station address obtaining the time and frequency information of the cell information transmitting window through the returning channel.

The above-mentioned step of the second cell obtaining the time and frequency information of the cell information transmitting window includes: the second cell obtaining appearance way information of the cell information transmitting window on the first frequency band and the third frequency band, wherein, the appearance way information comprises one or more of the following information that:
1). the cell information transmitting window appears in an event triggering mode;
2). the cell information transmitting window appears in a periodic mode;
the number of the appearances of the cell information transmitting window contained in each triggering when the cell information transmitting window appears in the event triggering mode.

The first radio access point does not use the time and frequency resources contained in the cell information transmitting window to transmit service data to the terminal served by the first radio access point.

The first radio access point and/or the second radio access point is a wireless nodes used for transmitting one-way downlink broadcast service.

The above-mentioned occupancy state of the spectrum resources on the cell covered by the second radio access point on the second frequency band can be one of the following frequency spectrum occupancy information:
when the second frequency band is a frequency band used by way of a time division duplex mode, the frequency spectrum occupancy information refers to an occupancy situation of a downlink time slot and/or a downlink time slot of the second radio access point on the second frequency band in next one or more radio frame periods (unless otherwise specified, "more" in the patent application refers to two or more than two);
when the second frequency band is a downlink frequency band in a FDD paired spectrum, or when the second frequency band is a frequency band used by way of one-way downlink, the frequency spectrum occupancy information refers to the occupancy situation of the downlink time slot of the second radio access point on the second frequency band in next one or more radio frame periods; and
when the second radio access point configures an uplink channel on a sixth frequently band, the frequency spectrum occupancy information refers to an occupancy situation of an uplink time slot of the second radio access point on the sixth frequency band in next one or more radio frame periods.

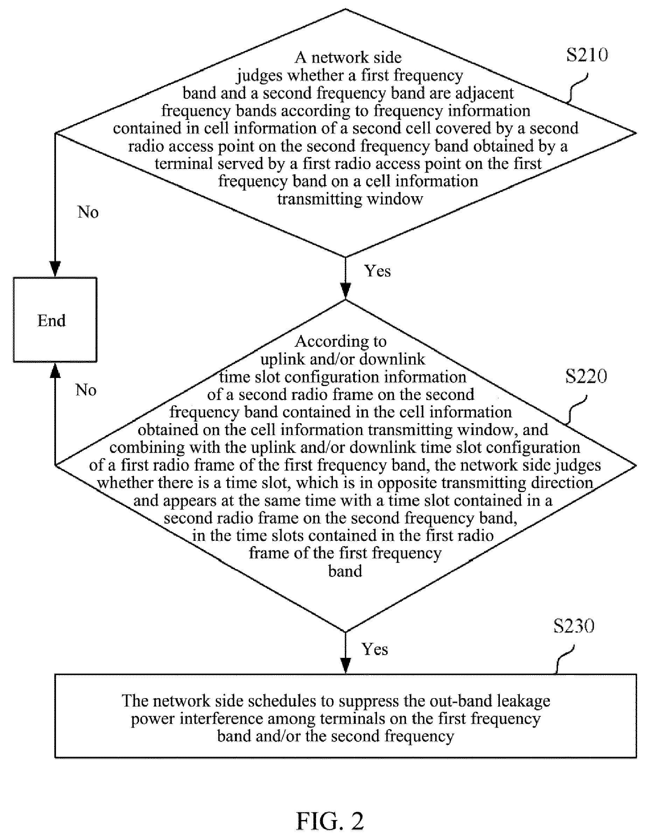

The embodiments of the present document further provide a method for suppressing out-band leakage power interference among terminals, which is on the basis of the aforesaid method for transmitting the cell information, and is suitable for suppressing the out-band leakage power interference among the terminals adjacent with each other in the geographical space. As shown in FIG. 2, the method mainly includes the following steps.

In step S210, a network side judges whether a first frequency band and a second frequency band are adjacent frequency bands according to frequency information contained in cell information of a second cell covered by a second radio access point on the second frequency band obtained by a terminal served by a first radio access point on the first frequency band on a cell information transmitting window. If the first frequency band and the second frequency band are adjacent frequency bands, then it is to turn to step S220; or else, processing performed on the terminal adjacent channel interference between the first frequency band and the second frequency band is ended.

In step S220, according to uplink and/or downlink time slot configuration information of a second radio frame on the second frequency band contained in the cell information obtained on the cell information transmitting window, and combining with the uplink and/or downlink time slot configuration of a first radio frame of the first frequency band, the network side judges whether there is a time slot which is in opposite transmitting direction and appears at the same time with a time slot contained in a second radio frame on the second frequency band, in the time slots contained in the first radio frame of the first frequency band; wherein, the time slots in opposite transmitting direction refer to that one of two time slots is an uplink time slot while another of the two time slots is a downlink time slot. If there are time slots which are in opposite transmitting directions and appear at the same time, then it is to turn to step S230; or else, processing performed on the terminal adjacent channel interference between the first frequency band and the second frequency band is ended.

In step S230, the network side schedules to suppress the out-band leakage power interference among terminals on the first frequency band and/or the second frequency band, which is specifically:
not allocating a channel for the terminal on at least one frequency band of the first frequency band and the second frequency band, in a time interval where the time slots in opposite transmitting directions and appearing at the same time exist;
or, setting an out-band leakage power isolation frequency band on at least one frequency band of the first frequency band and the second frequency band, in the time interval where the time slots in opposite transmitting directions and appearing at the same time exists, and not allocating a channel for the terminal on the out-band leakage power isolation frequency band;
wherein, a macro cell is arranged on the first frequency band, a micro cell is arranged on the second frequency band, and the micro cell is arranged in the area covered by the macro cell; or, what are arranged on the first frequency band and the second frequency band are all the micro cells.

The above-mentioned process of setting an out-band leakage power isolation frequency band on at least one frequency band of the first frequency band and the second frequency band, in the time interval where the time slots in opposite transmitting directions and appearing at the same time exists, and not allocating a channel for the terminal on the out-band leakage power isolation frequency band, includes specifically:
when a macro cell is arranged on the first frequency band, a micro cell is arranged on the second frequency band, and the micro cell is arranged in the area covered by the macro cell, channel resources can be allocated for a macro cell terminal and/ a micro cell terminal by means of:
   configuring the micro cell terminal on a frequency band which does not belong to the out-band leakage power isolation frequency band among the terminals, on the second frequency band;
   or configuring the macro cell terminal on a frequency band which does not belong to the out-band leakage power isolation frequency band among the terminals on the first frequency band, and allocating a transmitting channel or a receiving channel of the macro cell terminal which does not produce the out-band leakage power interference with the micro cell terminal onto the out-band leakage power isolation frequency band among the terminals in the first frequency band, and realizing a combination of frequency division multiplexing and space division multiplex of the first frequency band among the macro cell terminals.

The specific way for determining a macro cell terminal which does not have the adjacent channel interference with the micro cell terminal includes:
the macro cell terminal of which signal intensity or signal power received in the cell information transmitting window is less than a first preset threshold is determined as the macro cell terminal which does not produce the out-band leakage power interference with the micro cell terminal.

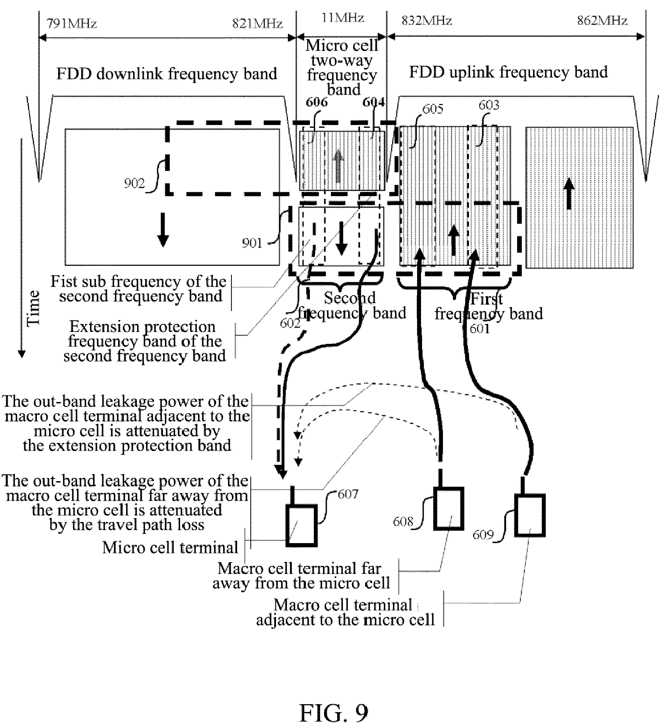

The above-mentioned time interval where the time slots in opposite transmitting directions and appearing at the same time exist is shown in FIG. 9. In the time interval 901, the first frequency band bears the uplink transmitting, and the second frequency band bears the downlink transmitting; while in the time interval 902, the second frequency band bears the uplink transmitting, and the FDD downlink frequency band adjacent to the second frequency band bears the downlink transmitting.

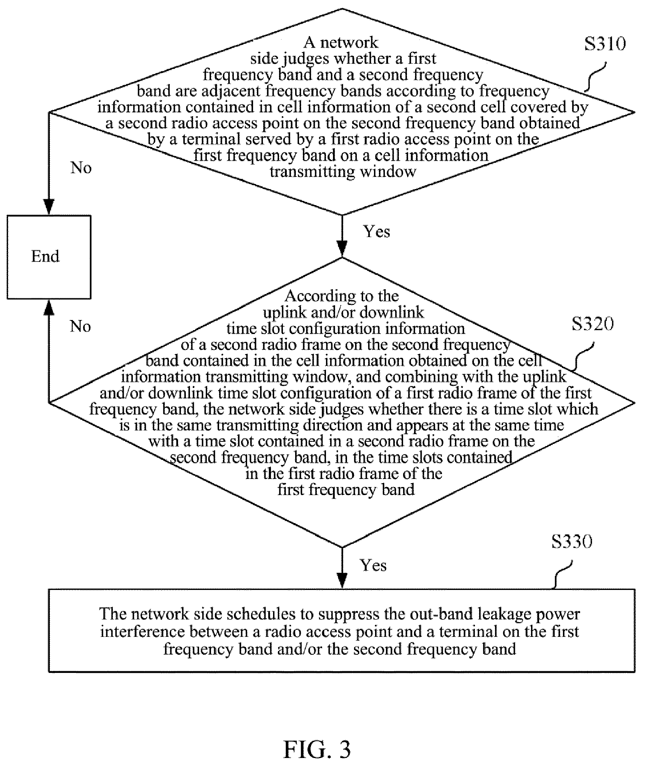

The embodiments of the present document further provide a method for suppressing out-band leakage power interference between a radio access point and a terminal, which is on the basis of the aforesaid method for transmitting the cell information, and is suitable for suppressing the out-band leakage power interference of a radio access point with a receiving channel of a terminal, or suitable for suppressing the out-band leakage power interference of a terminal with a receiving channel of a radio access point. As shown in FIG. 3 and combining with FIG. 9, the method mainly includes the following steps.

In step S310, a network side judges whether a first frequency band and a second frequency band are adjacent frequency bands according to frequency information contained in cell information of a second cell covered by a second radio access point on the second frequency band obtained by a terminal served by a first radio access point on the first frequency band on a cell information transmitting window. If the first frequency band and the second frequency band are adjacent frequency bands, then it is to turn to step S320; or else, processing performed on the terminal adjacent channel interference between the first frequency band and the second frequency band is ended.

In step S320, according to the uplink and/or downlink time slot configuration information of a second radio frame on the second frequency band contained in the cell information obtained on the cell information transmitting window, and combining with the uplink and/or downlink time slot configuration of a first radio frame of the first frequency band, the network side judges whether there is a time slot which is in the same transmitting direction and appears at the same time with a time slot contained in a second radio frame on the second frequency band, in the time slots contained in the first radio frame of the first frequency band; wherein, the time slots in the same transmitting direction refer to that the two time slots both are uplink time slots or downlink time slots. If there are time slot which are in the same transmitting direction and appear at the same time, then it is to turn to step S330; or else, processing performed on the terminal adjacent channel interference between the first frequency band and the second frequency band is ended.

In step S330, the network side schedules to suppress the out-band leakage power interference between a radio access point and a terminal on the first frequency band and/or the second frequency band, which can be specifically:
not allocating a channel for the terminal on at least one frequency band of the first frequency band and the second frequency band, in a time interval where the time slots in the same transmitting direction and appearing at the same time exist;
or, setting an out-band leakage power isolation frequency band on at least one frequency band of the first frequency band and the second frequency band, in the time interval where the time slots in the same transmitting direction and appearing at the same time exist, and not allocating a channel for the terminal on the out-band leakage power isolation frequency band.

Wherein, a macro cell is arranged on the first frequency band, and the first frequency band described here is the FDD downlink frequency band marked in FIG. 9; a micro cell is arranged on the second frequency band, and the second frequency band described here is the micro cell two-way frequency band marked in FIG. 9; and the micro cell is arranged in the area covered by the macro cell; or, what are arranged on the first frequency band and the second frequency band are the macro cells.

The above-mentioned specific process of setting an out-band leakage power isolation frequency band on at least one frequency band of the first frequency band and the second frequency band, in the time interval where the time slots in the same transmitting direction and appearing at the same time exist, and not allocating a channel for the terminal on the out-band leakage power isolation frequency band, includes specifically:
when a macro cell is arranged on the first frequency band, a macro cell or a micro cell is arranged on the second frequency band, and the micro cell is arranged in the area covered by the macro cell, channel resources are allocated for a macro cell terminal by means of:
   configuring the terminal on the first frequency band onto a frequency band which does not belong to the out-band leakage power isolation frequency band between the radio access point and the terminal, and allocating a transmitting channel or a receiving channel of a terminal on the second frequency band which does not produce the out-band leakage power interference with the radio access point on the second frequency band onto a frequency band which belong to the out-band leakage power isolation frequency band between the radio access point and the terminal in the first frequency band, and realizing a combination of frequency division multiplexing and space division multiplex of the first frequency band among the terminals on the first frequency band.

The specific way for determining a terminal on the first frequency band which does not have the adjacent channel interference with the radio access point on the second frequency band includes that:
the terminal, on the first frequency band, of which signal intensity or signal power of cell information on the second frequency band received in the cell information transmitting window on the first frequency band is less than a second preset threshold is determined as a terminal on the first frequency band which does not produce the out-band leakage power interference with the radio access point on the second frequency band.

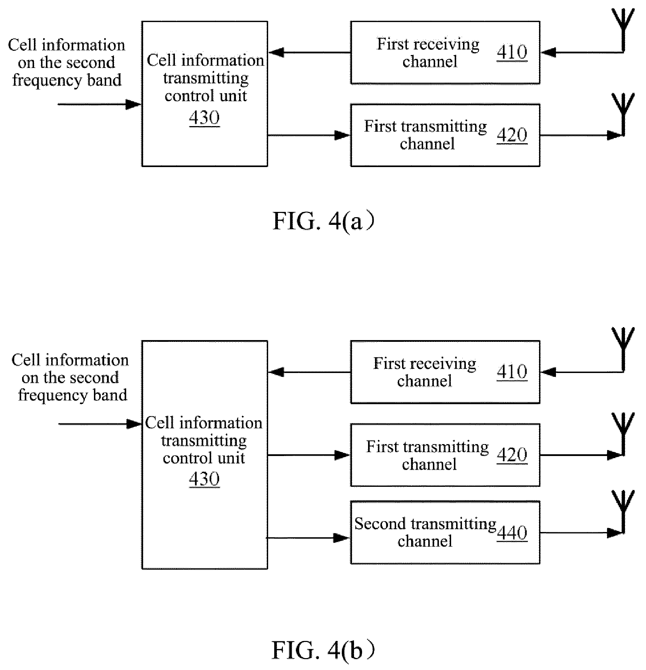

The embodiments of the present document further provide a cell information transmitting device, applied for transmitting the cell information among the radio access points arranged at heterologous station address and heterologous frequency band. As shown in FIG. 4 (a), it mainly includes a first receiving channel 410, a first transmitting channel 420 and a cell information transmitting control unit 430. Wherein,
the first receiving channel 410 is configured to receive a signal from a first radio frame transmitted on a first frequency band by a first radio access point located at a first station address, and obtain time information of the first radio frame;
the first transmitting channel 420 is configured to transmit cell information of a service cell covered by the second frequency band to a terminal served by the first radio access point on the first frequency band where the first radio access point configures the downlink channel or on a third frequency band among networking frequency bands of the downlink channel of a system to which the first radio access point belongs;
the cell information transmitting control unit 430 is configured to control the first transmitting channel 420 to transmit the cell information of the service cell covered by the second frequency band in the cell information transmitting window;
wherein, the cell information transmitting device is configured as the same physical device jointly designed with the second radio access point, or a physical device located at the second station address, or a physical device separated from the second radio access point and located in the second cell.

The above-mentioned first receiving channel 410 is a radio frequency receiving channel of which a center frequency can be configured on the first frequency band and a fourth frequently band by way of time division;
or, the first receiving channel 410 is a radio frequency receiving channel of which the center frequency and the bandwidth can be configured on the first frequency band and the fourth frequently band by way of the time division;
or, the first receiving channel 410 is a receiving channel which receives time information or a control command transmitted by a network side from a returning channel or;
wherein, the fourth frequency band is a frequency band different from the first frequency band or the third frequency band contained in networking frequency bands of the system to which the first radio access point belongs.

The first transmitting channel 420 is a radio frequency transmitting channel of which a center frequency can be configured on the first frequency band and the fourth frequently band by way of time division;
or, the first transmitting channel 420 is a radio frequency transmitting channel of which the center frequency and the bandwidth can be configured on the first frequency band and the fourth frequently band by way of the time division;
wherein, the fourth frequency band is a frequency band different from the first frequency band or the third frequency band contained in networking frequency bands of the system to which the first radio access point belongs.

The first transmitting channel 420 is configured to: transmit the cell information on the first frequency band and the fourth frequency band following different radio access technologies.

The cell information transmitting control unit 430 is configured to: produce the cell information of the service cell covered by the second frequency band following a radio access technical specification used by the first radio access point on the first frequency band, and use the first transmitting channel 420 to transmit the cell information of the service cell covered by the second frequency band in the cell information transmitting window.

The cell information of the service cell covered by the second frequency band comprises one or more of the following information:
cell public identification information of the service cell covered by the second frequency band; wherein, at this moment, a plurality of cells of the service cells covered by the second frequency band or radio access points configuring the channel on the second frequency band transmit the same information signs in the cell information transmitting window;
cell identifying information of the service cell covered by the second frequency band;
identifying information of the radio access point covering the service cell on the second frequency band;
carrier frequency point information of the radio access point covering the service cell on the second frequency band;
uplink and downlink time slot configuration information of a radio frame of the service cell covered by the second frequency band;
spectrum resources available for transferring of the service cell covered by the second frequency band; and
spectrum resources used on the service cell covered by the second frequency band.

When the cell information of the service cell covered by the second frequency band includes the cell public identification information of the service cell covered by the second frequency band, a plurality of radio access points configuring the channel on the second frequency band transmit same information signs in the cell information transmitting window; or, a plurality of radio access points configuring the channel on the second frequency band and a plurality of radio access points configuring the channel on a fourth frequency band transmit same information signs in the cell information transmitting window.

The cell information transmitting control unit 430 uses the first transmitting channel 420 to transmit the cell information of the service cell covered by the second frequency band in the cell information transmitting window, including:
the cell information transmitting control unit 430 transmitting the cell public identifying information and/or the cell public identification information according to a preset power value or according to power configuration information received by the first receiving channel 410 from the first radio access point.

In other embodiments of the present document, as shown in FIG. 4 (b), the cell information transmitting device further includes a second transmitting channel 440, configured to transmit one or more of the following signals to the first radio access point:
an access request signal;
cell public identification information of a cell covered by the second radio access point on the second frequency band;
cell identifying information of a cell covered by the second radio access point on the second frequency band;
carrier frequency point information of a cell covered by the second radio access point on the second frequency band;
system information of a cell covered by the second radio access point on the second frequency band;
uplink and downlink time slot configuration information of a cell covered by the second radio access point on the second frequency band;
occupancy state of spectrum resources of a cell covered by the second radio access point on the second frequency band; and
spectrum resources available for transferring of a cell covered by the second radio access point on the second frequency band;
geographic coordinate information of the second radio access point; and
frequency bands which can be covered by a radio frequency channel of the second radio access point and wireless communication technical specifications supported by these frequency bands.

The second transmitting channel 440 and the first transmitting channel 420 and the first receiving channel 410 share a same station address; or, the second transmitting channel 440 and the first transmitting channel 420 and the first receiving channel 410 act as different function units of one physical equipment.

The cell information transmitting device is located at the second station address or in the second cell, which is a physical entity integrally designed or separately designed with the second radio access point, and is configured to obtain the time and frequency information of the cell information transmitting window, take a time of the first radio frame transmitted by the first radio access point as a reference, use the time and frequency resources contained in the cell information transmitting window to transmit the cell information of the second radio access point on the second frequency band.

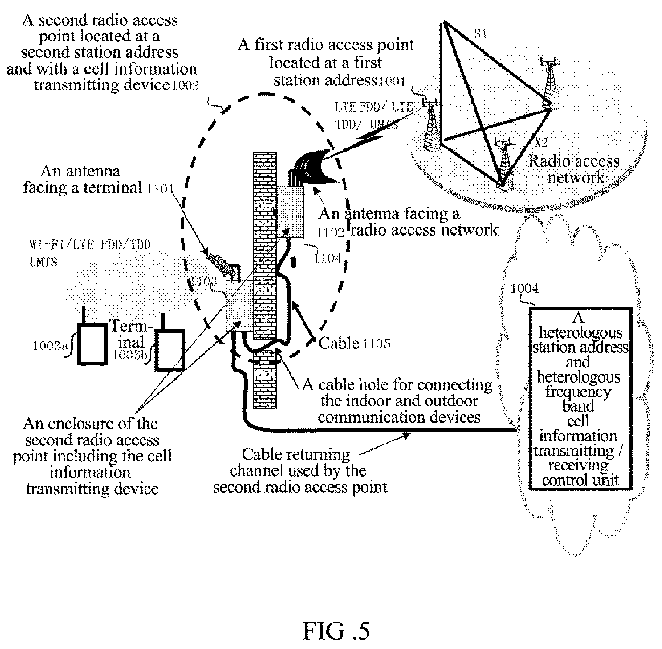

The embodiments of the present document further provide a heterologous frequency band and heterologous station address cell information transmitting and receiving system, suitable for a terminal served by a system arranged on a first frequency band to obtain, on the first frequency band, cell information on a second frequency band. As shown in FIG. 5, it mainly includes:
at least one cell information transmitting device 1002; at least a first radio access point 1001, wherein, the first radio access point 1001 covers a first cell; at least one terminal 1003 accessing the first radio access point (shown as a first terminal 1003a and a second terminal 1003b in the figure); and a cell information transmitting / receiving control unit 1004.

Wherein, the cell information transmitting device 1002 is arranged at a second station address, or arranged in a second cell covered by a second radio access point, and the cell information transmitting device 1002 includes a first receiving channel, a first transmitting channel and a cell information transmitting control unit; or comprises a first receiving channel, a first transmitting channel, a second transmitting channel and a cell information transmitting control unit.

Wherein, the first receiving channel is configured to: receive a signal on a first radio frame transmitted on a first frequency band by the first radio access point located at a first station address, to obtain time information of the first radio frame; or obtain time-frequency information of the cell information transmitting window or the time information of the first radio frame transmitted by a network side and transmitted on the first frequency band from a returning link of the second cell.

Wherein, the first transmitting channel is configured to: on the first frequency band used by the downlink channel of the first radio access point, or on the cell information transmitting window configured on a third frequency band among networking frequency bands of the downlink channel of a system to which the first radio access point belongs, transmit the cell information of the second cell to the terminal served by the first radio access point.

Wherein, the second transmitting channel is configured to: transmit one or more of an access request signal, an identification number of a second wireless node, a parameter for representing a second wireless node type or capacity, and cell information of a service cell on the second frequency band to the first radio access point.

Wherein, the cell information transmitting control unit is configured to: use the time information of the first radio frame received by the first receiving channel to control the first transmitting channel to transmit the cell information of the second cell in the cell information transmitting window.

Wherein, the first radio access point 1001 is located at a first station address and allocates time and frequency resources on the first frequency band used by the downlink channel of the first radio access point, or on the third frequency band among networking frequency bands of the downlink channel of the system to which the first radio access point belongs, wherein, the time and frequency resources serve as the cell information transmitting window of the second radio access point located at the second station address and configuring the downlink service channel and/or a control channel on a second frequency band.

Wherein, the first frequency band and the third frequency band are frequency bands contained in networking frequency bands of the downlink channel of the system to which the first radio access point 1001 belongs, and the first frequency band and the third frequency band are used by different cells in a group of adjacent cells, and the first frequency band and the third frequency band are orthogonal with respect to frequencies.

The cell information transmitting device 1002 is configured to: receive a downlink signal transmitted by the first radio access point 1001 on the first radio frame of the first frequency band, and obtain the time information of the first radio frame.

The cell information transmitting device 1002 is configured to: obtain time-frequency information of the cell information transmitting window on the first frequency band or the third frequency band, and, take a time of the first radio frame as a reference, transmit the cell information of the second cell on the second frequency band, on the time and frequency resources occupied by the cell information transmitting window.

The cell information transmitting device 1002 is configured to: use the time and frequency resources contained in the cell information transmitting window on the first frequency band or the third frequency band to transmit the cell information of the second cell, and the terminal receives the cell information of the second cell transmitted by the cell information transmitting device 1002 on the time and frequency resources contained in the cell information transmitting window on the first frequency band or the third frequency band.

The cell information transmitting / receiving control unit 1004 is located at the network side, referring to FIG. 5, and is configured to control the cell information transmitting device to use the cell information transmitting window configured on the first frequency band or the third frequency band to transmit the cell information of the second cell on the second frequency band, and control the terminal to receive the cell information of the second cell on the second frequency band in the cell information transmitting window, and control the terminal to receive the cell information of the second cell on the second frequency band in the cell information transmitting window. The cell information transmitting / receiving control unit 1004 can be a physical unit located in the second cell, or is integrally design with the cell information transmitting device 1002.

The cell information transmitting / receiving control unit 1004 is configured to: transmit a cell information transmitting window parameter to the cell information transmitting device, and control the cell information transmitting device to transmit the cell information of the second cell in the cell information transmitting window on the first frequency band or the third frequency band.

The cell information transmitting window parameter comprises at least one of the following parameters:
a time interval and a frequency interval occupied by the cell information transmitting window on the first frequency band or the third frequency band; and
an appearance mode of the cell information transmitting window on the first frequency band or the third frequency band.

The time interval occupied by the cell information transmitting window on the first frequency band or the third frequency band includes:
a time interval occupied by the cell information transmitting window on the first frequency band or the third frequency band, expressed by taking a slot time or a frame head time of the first radio frame of the first frequency band as a base time / as a reference time.

The appearance mode of the cell information transmitting window on the first frequency band or the third frequency band can be: a periodical appearance or an event triggering appearance.

The cell information transmitting / receiving control unit 1004 is configured to: transmit the cell information transmitting window parameter to the cell information transmitting device through an air interface on the first frequency band.

When the cell information transmitting / receiving control unit 1004 transmits the cell information transmitting window parameter to the cell information transmitting device, at least one terminal of which the downlink channel is configured on the first frequency band and the cell information transmitting device receive the cell information transmitting window parameter at the same time.

The second radio access point 1002, which is with the cell information transmitting device and located in the second station address, uses an antenna 1101 facing the terminal to transmit, on the first or the third frequency band, the cell information of the second cell on the second frequency band; the second radio access point 1002 uses the antenna 1102 facing the radio access network to receive the radio frame information transmitted by the radio access point 1001 on the first frequency band, or receive relevant information of the cell information transmitting window transmitted by the radio access point 1001 on the first frequency band;
the second radio access point 1002 includes a cell information transmitting unit 11003 and a receiving unit 1104 for receiving the relevant information of the cell information transmitting window from the radio access network.

The heterologous station address and heterologous frequency band cell information transmitting and receiving unit 1004 is provided in FIG. 5; when the wireless node at the second station address has a connection with a cable network, the heterologous station address and heterologous frequency band cell information transmitting and receiving unit 1004 obtains the indication information required for transmitting the cell information of the second cell from the network side, such as, the synchronization information of the radio frame on the first frequency band, or obtains the information of the cell information transmitting window.

In a process of the cell information transmitting / receiving control unit 1004 controlling the terminal to receive the cell information on the second frequency band in the cell information transmitting window, the cell information transmitting / receiving control unit 1004 is further configured to transmit a measurement content performed in the cell information transmitting window to the terminal, and the measurement content comprises at least one of the following measurement contents:
a measurement of a cell public identifier used by the second cell;
a measurement of a cell number used by the second cell;
a measurement of the second wireless node number;
a measurement of signal intensity or signal power in the cell information transmitting window of the second cell; and
an obtainment of the information of the frequency point contained in the cell information of the second cell.

The cell information transmitting / receiving control unit 1004 transmits the measurement content performed in the cell information transmitting window to the terminal by means of that the first radio access point 1001 transmits, through the air interface on the first frequency band, to the terminal of which the downlink channel is configured on the first frequency band.

The process of the information transmitting / receiving control unit 1004 transmitting the measurement content performed in the cell information transmitting window to the terminal, comprises: the cell information transmitting device receives the measurement content transmitted by the first radio access point 1001 through the air interface on the first frequency band to the terminal of which the downlink channel is configured on the first frequency band, and determines to transmit corresponding cell information according to the measurement content of the terminal.

The cell information transmitting / receiving control unit 1004 receives one or more of the following information from the cell information transmitting device:
cell public identification information of a cell covered by the second radio access point on the second frequency band;
cell identifying information of a cell covered by the second radio access point on the second frequency band;
carrier frequency point information of a cell covered by the second radio access point on the second frequency band;
system information of a cell covered by the second radio access point on the second frequency band;
uplink and downlink time slot configuration information of a cell covered by the second radio access point on the second frequency band;
occupancy state of spectrum resources of a cell covered by the second radio access point on the second frequency band; and
spectrum resources available for transferring of a cell covered by the second radio access point on the second frequency band;
geographic coordinate information of the second radio access point; and
frequency bands which can be covered by a radio frequency channel of the second radio access point and wireless communication technical specifications supported by these frequency bands.

The experiment example of the embodiment of the present document provides a method for transmitting the cell information. There is a third radio access point at the first station address, and a cell information transmitting window is developed on a fifth frequency band used by the downlink channel of the third radio access point, or on a fourth frequency band in networking frequency bands of the downlink channel of the system to which the third radio access point belongs, for the second radio access point which configures a downlink service channel and a control channel on the second frequency band and is located at the second station address. The second radio access point transmits the cell information of the first radio access point on the second frequency band in the cell information transmitting window in the fifth frequency band or in the fourth frequency band.

The window is configured for the micro cell on the time and frequency resources used in the macro cell, and specifically: the cell information of the first radio access point on the second frequency band is transmitted at a preset time-frequency window (micro cell information transmitting window), to avoid the co-channel interference and the adjacent channel interference. Further, a plurality of micro cells are transmitted synchronously at the same time-frequency window.

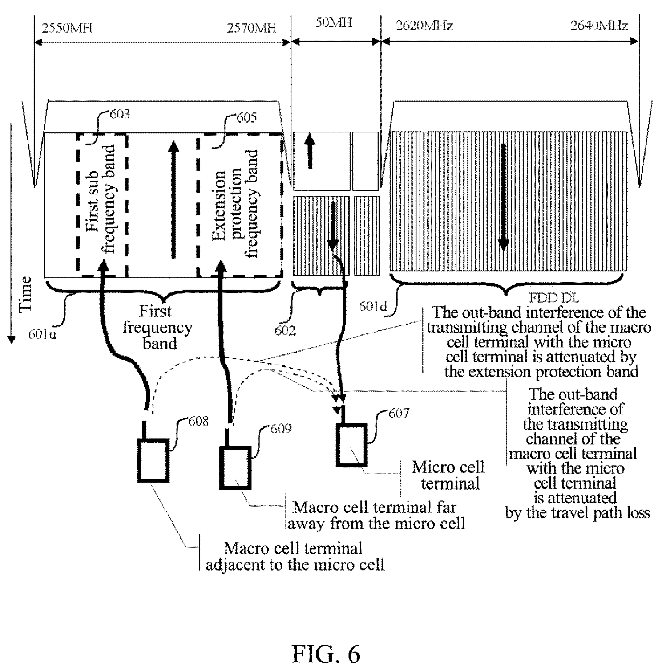

The experiment example of the embodiment of the present document provides a method for reducing the adjacent channel interference of the FDD macro cell terminal with the TDD micro cell terminal. Referring to FIG. 6, the first frequency band used by the FDD macro cell radio access point includes an FDD uplink frequency band 601u and an FDD downlink frequency band 601d. The second frequency band 602 is a two-way used and non-paired TDD frequency band. Specifically, the frequency range of the FDD uplink frequency band 601u in the first frequency band is 2550 megahertz (MHz) ~2570MHz, and the TDD frequency band 602 is part or all of frequency bands located in the range of 2570MHz ~2660MHz.

The FDD uplink frequency band 601u in the first frequency band further includes a first sub-frequency band 603 and an extension protection frequency band 605. The micro cell terminal 607 is resident on the second frequency band used by the micro cell radio access point.

In the adjacent relationship and the uplink-downlink relationship between the FDD uplink frequency band 601u in the first frequency band and the second frequency band 602, the out-band leakage power of the transmitting channel of the macro cell terminal on the FDD uplink frequency band 601u of the first frequency band will produce interference with the receiving channels of the micro cell terminal 607 for receiving the signal by using its downlink frequency spectrum part on the second frequency band 602 under a certain condition.

When the network side judges whether there is a potential interference relationship between the macro cell first terminal 609 far away from the micro cell and the macro cell second terminal 608 close to the micro cell with the micro cell terminal 607, and the specific judgment way is: transmitting a micro cell detection command to the macro cell first terminal 608 and the macro cell second terminal 609, and the micro cell detection command includes working frequency point information of the micro cell radio access point and the ID information of the micro cell radio access point which is working at the second frequency band 602 and has a link connection with the micro cell terminal 607. Further, the beacon form of the micro cell radio access point can also be included. The macro cell first terminal 608 and the macro cell second terminal 609 detect the specific beacon on the specific frequency point and perform the power measurement according to the micro cell detection command distributed by the network side.

The signal intensity of the micro cell beacon working on the second frequency band 602 detected by the macro cell first terminal 608 is greater than a signal intensity threshold Thr_micr_strength of the micro cell radio access point, then itself (that is, the macro cell first terminal 608) is judged as a terminal having the adjacent channel interference relationship with the micro cell terminal 607. Therefore, the network side configures the macro cell first terminal 608 onto the first sub-frequency band 603 of the first frequency band, and there is a first extension protection band 605 between the first sub-frequency band 603 and the second sub-frequency band 602. Because of the isolation effect of the first extension protection band 605, the out-band interference of the transmitting channel of the macro cell first terminal 608 with the micro cell terminal 607 is attenuated by the first extension protection band 605. Therefore, the interference power of the micro cell terminal 607 with the out-band leakage power of the transmitting channel of the macro cell first terminal 608 is effectively attenuated.

The signal intensity of the micro cell beacon working on the second frequency band 602 detected by the macro cell second terminal 609 is less than a signal intensity threshold Thr_micr_strength of the micro cell radio access point, then itself (that is, the macro cell second terminal 609) is judged as a terminal which does not have the adjacent channel interference relationship with the micro cell terminal 607. Therefore, the network side configures the macro cell second terminal 609 onto the first extension protection band 605, closed to the second frequency band 602, of the FDD uplink frequency band 601u of the first frequency band. Although the frequency interval between the transmitting channel of the macro cell second terminal 609 and the receiving channel of the micro cell terminal 607 is very small, because the out-band interference of the transmitting channel of the macro cell second terminal 609 with the micro cell terminal 607 is attenuated by the travel path loss, the interference of the out-band power radiation of the transmitting channel of the macro cell second terminal 609 with the receiving channel of the micro cell terminal 607 is also reduced significantly.

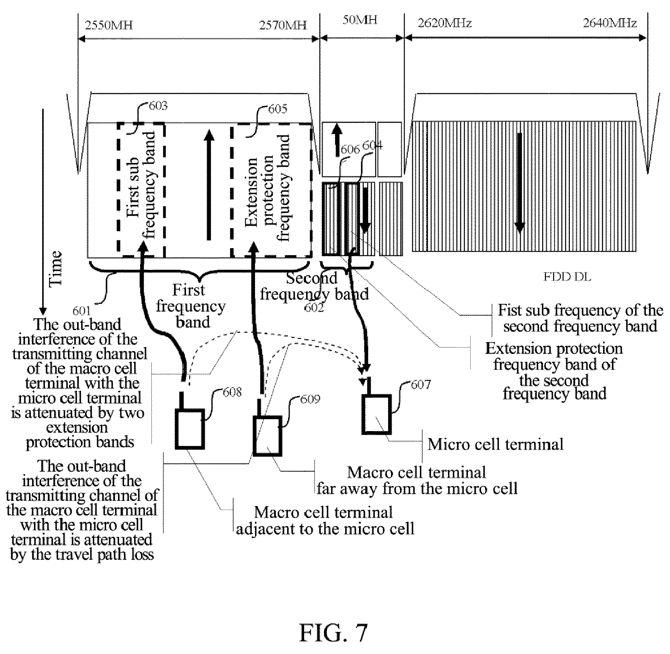

In the case of the second frequency band 602 bandwidth as shown in FIG. 6 (20MHz between 2570MHz to 2590MHz), in order to further reduce the interference produced by the out--band leakage power of the transmitting channel of the macro cell terminal with the receiving channel of the micro cell terminal 607, in the embodiments of the present document, a mode of configuring a second extension protection band 606 on the second frequency band 602 can further be adopted, that is, setting a second extension protection band 606 for the terminal at a side on the second frequency band 602 close to the FDD uplink frequency band 601u of the first frequency band, and please refer to FIG. 7. While the receiving channel of the micro cell terminal 607 is arranged onto the first sub-frequency band 604 of the second frequency band 602.

The first sub-frequency band 603 in the first frequency band can be a frequency band covered by a single uplink carrier, or the FDD uplink frequency band 601u of the whole first frequency band can be covered by an uplink carrier.

The first sub-frequency band 604 in the second frequency band 602 can be a frequency band covered by a single downlink carrier, and also can be part of the time and frequency resources block born by a downlink carrier which covers the whole second frequency band 602.

In the adjacent relationship and the uplink-downlink relationship between the FDD downlink frequency band 601d in the FDD paired frequency spectrum of the first frequency band and the second frequency band 602 provided by the application as shown in FIG. 6, the receiving channel of the macro cell terminal on the FDD downlink frequency band 601d of the first frequency band will be interfered by the out-band leakage of the transmitting channel of the micro cell terminal 607 for transmitting the signal by using its uplink frequency spectrum part on the second frequency band 602 under a certain condition.

The experiment example of the embodiment of the present document provides a method for reducing the adjacent channel interference of the TDD micro cell terminal with the FDD macro cell terminal. Referring to FIG. 7, in the frequency band range of 2570MHz ~2620MHz used by the TDD mode, the 2570MHz ~2590MHz bandwidth and the 2600MHz ~2620MHz bandwidth serve as the second frequency band 602 covered by the micro cell, and 2590MHz ~2600MHz bandwidth is used for the working frequency of the radio access point of the TDD macro cell. In order to describe easily, the present embodiment only discusses the adjacent channel interference control between the micro cell terminal 607 on 2570MHz ~2590MHz in the second frequency band and the macro cell first terminal 608 and the macro cell second terminal 609 working in 2590MHz ~2600MHz.

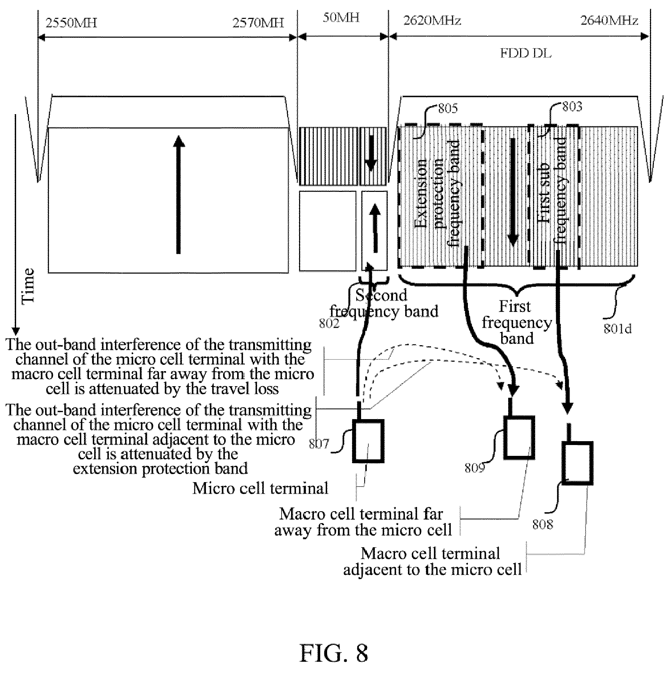

In FIG. 8, the TDD radio frame on the first frequency band and the radio frame on the right part 802r of the second frequency band keep consistent at the uplink-downlink time slot configuration, so the first frequency band does not produce the potential adjacent channel interference with the right part 802r of the second frequency band 802, but the first frequency band produces the potential adjacent channel interference with the left part 8021 of the second frequency band 802. The time-frequency interval 811 having the adjacent channel interference varies with the difference between the ratios of the uplink-downlink time slot configurations of the micro cell and the macro cell.

The 2570MHz ~2590MHz part of the second frequency band 802 further includes a first sub-frequency band 804 and an extension protection band 806. The micro cell terminal 807 is resident on the second frequency band used by the micro cell radio access point.

In the adjacent relationship and the uplink-downlink relationship between the first frequency band and the second frequency band 602 as shown in FIG. 8, the out--band leakage power of the transmitting channel of the macro cell first terminal 808 closed to the micro cell and/or the macro cell second terminal 809 far away from the micro cell on the uplink frequency band of the first frequency band will produce interference with the receiving channel of the micro cell terminal 807 for receiving the signal by using its downlink frequency spectrum part on the second frequency band 602 under a certain condition.

The process of the network side judging whether there is a potential interference relationship between the macro cell first terminal 808 and the macro cell second terminal 809 and the micro cell terminal 807 is mainly:
the network side obtains the uplink resources configuration information of the macro cell first terminal 808 and the macro cell second terminal 809 from the base station corresponding to the macro cell radio access point covering the micro cell radio access point accessed by the micro cell terminal 807, and transmits the uplink time and frequency resources information of the macro cell first terminal 808 and the macro cell second terminal 809 to the micro cell terminal 807;
the macro cell terminal 807 detects the signal intensity on the time and frequency resources on the first frequency band where the transmitting channels of the macro cell first terminal 808 and the macro cell second terminal 809 exist according to the macro cell terminal (the macro cell first terminal 808 and the macro cell second terminal 809) uplink time and frequency resources information transmitted by the network side, and reports the measurement data or the measurement result to the network side;
the network side compares the signal intensity of the transmitting channel of the macro cell first terminal 808 and the macro cell second terminal 809 reported by the micro cell terminal 807 with the preset transmitting signal intensity threshold of the macro cell terminal Thr_macrUE_strength, here, the measurement result of the transmitting signal intensity of the macro cell first terminal 808 by the micro cell terminal 807 is greater than the threshold Thr_macrUE_strength, then the micro cell terminal 807 and the macro cell first terminal 808 are judged as the terminals which have the interference relationship. And the measurement result of the transmitting signal intensity of the macro cell second terminal 809 by the micro cell terminal 807 is less than the threshold Thr_macrUE_strength, then the micro cell terminal 807 and the macro cell second terminal 809 are judged as the terminals which does not have the interference relationship. Impliedly, the macro cell second terminal 809 is a macro cell terminal far away from the micro cell where the micro cell terminal 807 locates.

For suppressing the interference of the out-band leakage power of the transmitting channel of the macro cell first terminal 808 with the receiving channel of the micro cell terminal 807, the macro cell second terminal 809 is configured on the first sub-frequency band 803 of the first frequency band. In the transmitting time interval of the macro cell second terminal 809, the adjacent frequency band of the first sub-frequency band 603 of its first frequency band -- in the 2600MHz ~ 2620MHz bandwidth range of the second frequency band, is used in the uplink, therefore, the configuration provided by the present embodiment will not produce the interference of the out-band leakage power of the transmitting channel of the macro cell terminal configured on the first sub-frequency band 603 of the first frequency band with the receiving channel of the terminal configured on the 2600MHz ~ 2620MHz of the second frequency band, and that is because in this time interval, the micro cell terminal on the 2600MHz ~2620MHz is in the transmitting state as well.

Another method for reducing the interference of the macro cell terminal with the micro cell terminal is: not limiting the frequency usage of the macro cell second terminal 809 on the first frequency band, but adjusting the frequency resource usage of the micro cell terminal 807 -- configuring the micro cell terminal onto the first sub-frequency band 804 of the second frequency band, avoiding the interference produced by the macro cell second terminal 809 with the micro cell terminal 807 by introducing the extension protection band 806 between the first sub-frequency band 804 and the first frequency band.

In the present embodiment, the first frequency band provided in FIG. 8 can be covered by a physical carrier transmitted by a terminal, and also can be cover by the physical carriers, of which the center frequencies are different, transmitted by different terminals. In the downlink time slot of the second frequency band, a left part 6011 of the whole second frequency band can be covered by a modulation bandwidth, or different sub-frequency bands in the left part 6011 of the second frequency band are covered by a plurality of physical carriers, for example, a downlink carrier only covers the first subcarrier 804 in the left part 6011 of the second frequency band, and a subcarrier only covers the extension protection band 606 in the left part 6011 of the second frequency band.

In sum, the embodiments of the present document provide a method for reducing the adjacent channel interference between the macro cell terminal working in the FDD or TDD and the micro cell terminal working in the TDD mode, which are adjacent with each other in geographical space, and can reduce the intensity of one or two of the following interferences:
(1). interference of the out-band leakage power of the transmitting channel of the terminal served by the macro cell with the receiving channel of the terminal served by the micro cell adjacent to the macro cell in the geographical space;
(2). interference of the out-band leakage power of the transmitting channel of the terminal served by the micro cell with the receiving channel of the terminal served by the macro cell adjacent to the micro cell in the geographical space.

The embodiment of the present document provide a method for the first radio access point transmitting the cell information of the first radio access point on the networking frequency bands of the system to which the second radio access point belongs through the radio access technology which is the same with that of the second radio access point, wherein, the second radio access point is arranged at a heterologous frequency band and heterologous station address with the radio access point, and with the method, the problem that the existing terminal cannot be extensively integrated, existed in the existing CPC method, is overcome; and the co-channel interference and the adjacent channel interference existed in the method that the current indoor covering system and the outdoor macro cell use the same frequency point to transmit the system message of the indoor covering system when the current indoor covering system and the outdoor macro cell use different frequency points to configure the service channel, is overcome.

The embodiments of the present document also are suitable for the first radio access point using the first radio access technology to transmit the cell information on the networking frequency bands of the system to which the second radio access point belongs, wherein, the second radio access point is arranged at a heterologous frequency band and heterologous station address with the first radio access point and uses the second radio access technology. The embodiments of the present document also are suitable for the first radio access point using the first radio access technology to transmit the cell information on the networking frequency bands of the system to which the second radio access point belongs and on the networking frequency bands of the system to which the third radio access point belongs, wherein, the second radio access point is arranged at a heterologous frequency band and heterologous station address with the first radio access point and uses the second radio access technology, and the third radio access point is arranged at a heterologous frequency band and heterologous station address with the first radio access point and uses the third radio access technology.

It can be understood by those skilled in the art that the device and/or each component part of the system provided by the above-mentioned embodiments of the present document and each step of the method can be implemented by the universal calculating apparatus, and they can be integrated in a single calculating apparatus, or distributed in the network made up by a plurality of calculating apparatus. Alternatively, they can be implemented by the executable program codes of the calculating apparatus. Accordingly, they can be stored in the storage apparatus and implemented by the calculating apparatus, or they are made into each integrated circuit module respectively, or a plurality of modules or steps therein are made into the single integrated circuit module to be implemented. In this way, the present document is not limit to any specific form of the combination of the hardware and software.

Although the embodiments are disclosed in the present document as above, the description is only for the embodiments adopted for understanding the present document easily, while not for limiting the present document. Those skilled in the art can make any modification and variation on the form and detail of the implement without departing from the spirit and essence disclosed by the present document. And the patent protection scope of the present document still need to be subject to the scope of the appended claims of the present document.

### Industrial Applicability

The technology idea adopted by the embodiments of the present document is to transmit the cell information of the wireless node providing services on another frequency band, on the frequency band at which the terminal works currently, according to the radio access technology which can be supported by the terminal, while the terminal is not required to perform the cross frequency band measurement, and it is easy for the terminal to detect, on the current working frequency band, the potential service cell existed on other frequency bands, and it is easy to realize the cooperation among the wireless nodes adopting different radio access technologies on different frequency bands, therefore, it has more applicability in comparison with the current CPC technology.

## Claims

1. A method for suppressing out-band leakage power interference among terminals, applied at a network side, comprising:
judging that a first frequency band and a second frequency band are adjacent frequency bands according to frequency information contained in cell information of a second cell covered by a second radio access point on the second frequency band obtained by a terminal served by a first radio access point on the first frequency band on a cell information transmitting window;
according to uplink and/or downlink time slot configuration information of a second radio frame on the second frequency band contained in the cell information obtained on the cell information transmitting window, and combining with uplink and/or downlink time slot configuration of a first radio frame of the first frequency band, judging that there is a time slot, which is in an opposite transmitting direction and appears at a same time with a time slot contained in a second radio frame on the second frequency band, in time slots contained in the first radio frame of the first frequency band; wherein, time slots in opposite transmitting directions refer to that one of two time slots is an uplink time slot while another one of the two time slots is a downlink time slot; and
scheduling to suppress the out-band leakage power interference among terminals on the first frequency band and/or the second frequency band.

2. The method according to claim 1, wherein, the step of scheduling to suppress the out-band leakage power interference among terminals on the first frequency band and/or the second frequency band comprises:
in a time interval where the time slots which are in opposite transmitting directions and appear at a same time exist, not allocating a channel for the terminal on at least one frequency band of the first frequency band and the second frequency band;
or, in a time interval where the time slots which are in opposite transmitting directions and appear at a same time exist, setting an out-band leakage power isolation frequency band on at least one frequency band of the first frequency band and the second frequency band, and not allocating a channel for the terminal on the out-band leakage power isolation frequency band.

3. The method according to claim 2, wherein:
a macro cell is arranged on the first frequency band, a micro cell is arranged on the second frequency band, and the micro cell is arranged in an area covered by the macro cell;
or, what are arranged on the first frequency band and the second frequency band are all micro cells.

4. The method according to claim 3, wherein: the step of, in a time interval where the time slots which are in opposite transmitting directions and appear at a same time exist, setting an out-band leakage power isolation frequency band on at least one frequency band of the first frequency band and the second frequency band, and not allocating a channel for the terminal on the out-band leakage power isolation frequency band, comprises:
when a macro cell is arranged on the first frequency band, a micro cell is arranged on the second frequency band, and the micro cell is arranged in an area covered by the macro cell, allocating channel resources for a macro cell terminal and/ a micro cell terminal according to the following ways:
configuring the micro cell terminal onto a frequency band which does not belong to the out-band leakage power isolation frequency band among the terminals on the second frequency band;
or configuring the macro cell terminal on a frequency band which does not belong to the out-band leakage power isolation frequency band among the terminals on the first frequency band, and allocating a transmitting channel or a receiving channel of the macro cell terminal which does not produce the out-band leakage power interference with the micro cell terminal onto the out-band leakage power isolation frequency band among the terminals in the first frequency band, and realizing a combination of frequency division multiplexing and space division multiplex of the first frequency band among the macro cell terminals.

5. The method according to claim 4, wherein:
a macro cell terminal of which signal intensity or signal power received in the cell information transmitting window is less than a first preset threshold is determined as a macro cell terminal which does not produce the out-band leakage power interference with the micro cell terminal.

6. A method for suppressing out-band leakage power interference between a radio access point and a terminal, applied at a network side, comprising:
judging that a first frequency band and a second frequency band are adjacent frequency bands according to frequency information contained in cell information of a second cell covered by a second radio access point on the second frequency band obtained by a terminal served by a first radio access point on the first frequency band on a cell information transmitting window;
according to uplink and/or downlink time slot configuration information of a second radio frame on the second frequency band contained in the cell information obtained on the cell information transmitting window, and combining with uplink and/or downlink time slot configuration of a first radio frame of the first frequency band, judging that there is a time slot, which is in a same transmitting direction and appears at a same time with a time slot contained in a second radio frame on the second frequency band, in time slots contained in the first radio frame of the first frequency band; wherein, time slots in a same transmitting direction refer to that two time slots are both uplink time slots or downlink time slots; and
scheduling to suppress the out-band leakage power interference between a radio access point and a terminal on the first frequency band and/or the second frequency band.

7. The method according to claim 6, wherein, the step of scheduling to suppress the out-band leakage power interference between the radio access point and a terminal on the first frequency band and/or the second frequency band comprises:
in a time interval where the time slots which are in a same transmitting direction and appear at a same time exist, not allocating a channel for the terminal on at least one frequency band of the first frequency band and the second frequency band;
or, in a time interval where the time slots which are in a same transmitting direction and appear at a same time exist, setting an out-band leakage power isolation frequency band on at least one frequency band of the first frequency band and the second frequency band, and not allocating a channel for the terminal on the out-band leakage power isolation frequency band.

8. The method according to claim 7, wherein:
a macro cell is arranged on the first frequency band, a micro cell is arranged on the second frequency band, and the micro cell is arranged in an area covered by the macro cell;
or, what are arranged on the first frequency band and the second frequency band are all macro cells.

9. The method according to claim 8, wherein: the step of, in a time interval where the time slots which are in a same transmitting direction and appear at a same time exist, setting an out-band leakage power isolation frequency band on at least one frequency band of the first frequency band and the second frequency band, and not allocating a channel for the terminal on the out-band leakage power isolation frequency band comprises:
when a macro cell is arranged on the first frequency band, a macro cell or a micro cell is arranged on the second frequency band, and the micro cell is arranged in an area covered by the macro cell, allocating channel resources for a macro cell terminal according to the following ways:
configuring the terminal on the first frequency band onto a frequency band which does not belong to the out-band leakage power isolation frequency band between the radio access point and the terminal, and allocating a transmitting channel or a receiving channel of a terminal on the second frequency band which does not produce the out-band leakage power interference with the radio access point on the second frequency band onto a frequency band which belong to the out-band leakage power isolation frequency band between the radio access point and the terminal in the first frequency band, and realizing a combination of frequency division multiplexing and space division multiplex of the first frequency band among the terminals on the first frequency band.

10. The method according to claim 9, wherein:
a terminal of which signal intensity or signal power of cell information on the second frequency band received in the cell information transmitting window on the first frequency band is less than a second preset threshold is determined as a terminal on the first frequency band, which does not produce the out-band leakage power interference with the radio access point on the second frequency band.
